# EUROPEAN PATENT APPLICATION

(11) **EP 4 235 921 A1**
(43) Date of publication of application: **30.08.2023**
(21) Application number: 23158125.7
(22) Date of filing: 23.02.2023
(51) Int. Cl.: H01M 50/204, H01M 50/271, H01M 50/291, H01M 50/293, H01M 50/507

(54) **BATTERY MODULE**

(30) Priority: 24.02.2022 KR 20220024134
(71) Applicant: SK On Co., Ltd., Seoul 03161 (KR)
(72) Inventor: LEE, Eung Ho, 34124 Daejeon (KR); KIM, Tae Hyeon, 34124 Daejeon (KR); NAM, Deok Ho, 34124 Daejeon (KR); YOON, Jun Seo, 34124 Daejeon (KR); YOON, Hwa Kyoo, 34124 Daejeon (KR)
(74) Representative: Prüfer & Partner mbB Patentanwälte · Rechtsanwälte

(57) **Abstract**

A battery module (10) is disclosed. The battery module (10) includes a battery cell assembly (100) including a plurality of battery cells (110); a case assembly (200) accommodating the battery cell assembly (100), the case assembly (200) including a top case (221) positioned on the battery cell assembly (100); and a bus bar assembly (300) including a bus bar unit (310) configured to electrically connect the plurality of battery cells (110), a connection frame (320) connected to the bus bar unit (310) and positioned under the top case (221), and an expansion sheet (340) positioned between the connection frame (320) and the top case (221). When a heat is applied to the expansion sheet (340) and a temperature of the expansion sheet (340) is higher than or equal to a predetermined temperature, the expansion sheet (340) expands toward the top case (221).

## Description

### TECHNICAL FIELD

The present disclosure relates to a battery module. In particular, the present disclosure relates to a battery module filling a space formed by deformation of an upper cover due to heat.

### BACKGROUND

An upper cover of a battery module may be convexly deformed upward by heat generated when a fire such as thermal runaway occurs in the battery module. When the upper cover of the battery module is convexly deformed upward, a high-temperature gas moves to a space formed in the upper cover, and gas discharge is not smooth, which may cause difficulty in extinguishing a fire.

In order to solve this problem, a method of preventing the high temperature gas from being located in the space formed in the upper cover may be considered. For example, a method of filling, with another member, a space formed by upward convexly deforming the upper cover of the battery module may be considered.
(Patent Document 1) KR 10-2254205 B1

### SUMMARY

An object of the present disclosure is to address the above-described and other problems.

Another object of the present disclosure is to provide a battery module filling a space formed in an upper cover when the upper cover is deformed by heat.

Another object of the present disclosure is to provide a battery module including an expansion sheet that is positioned between an upper cover and a battery cell and expands by heat.

In order to achieve the above-described and other objects and needs, in one aspect of the present disclosure, there is provided a battery module comprising a battery cell assembly including a plurality of battery cells; a case assembly accommodating the battery cell assembly, the case assembly including a top case positioned on the battery cell assembly; and a bus bar assembly including a bus bar unit configured to electrically connect the plurality of battery cells, a connection frame connected to the bus bar unit and positioned under the top case, and an expansion sheet positioned between the connection frame and the top case, wherein when a heat is applied to the expansion sheet and a temperature of the expansion sheet is higher than or equal to a predetermined temperature, the expansion sheet expands toward the top case.

In another aspect of the present disclosure, there is provided a battery module comprising a battery cell assembly including a plurality of battery cells; a case assembly accommodating the battery cell assembly, the case assembly including a top case positioned on the battery cell assembly; and a bus bar assembly including a bus bar unit configured to electrically connect the plurality of battery cells, a connection frame connected to the bus bar unit and positioned under the top case, and an expansion sheet positioned between the connection frame and the top case, the expansion sheet expanding by a heat, wherein an upper surface of the expansion sheet is flat, and wherein a lower surface of the expansion sheet is convex toward the connection frame.

In another aspect of the present disclosure, there is provided a battery module comprising a battery cell assembly including a plurality of battery cells; a case assembly accommodating the battery cell assembly, the case assembly including a top case positioned on the battery cell assembly; and a bus bar assembly including a bus bar unit configured to electrically connect the plurality of battery cells, a connection frame connected to the bus bar unit and positioned under the top case, and an expansion sheet positioned between the connection frame and the top case, the expansion sheet expanding by a heat, wherein the expansion sheet includes a first expansion sheet portion forming a central portion of the expansion sheet, and a second expansion sheet portion forming an edge of the expansion sheet, wherein an expansion rate of the first expansion sheet portion is greater than an expansion rate of the second expansion sheet portion.

Effects of the battery module according to the present disclosure are described as follows.

According to at least one aspect of the present disclosure, the present disclosure can provide a battery module filling a space formed in an upper cover when the upper cover is deformed by heat.

According to at least one aspect of the present disclosure, the present disclosure can provide a battery module including an expansion sheet that is positioned between an upper cover and a battery cell and expands by heat.

Additional scope of applicability of the present disclosure will become apparent from the detailed description given blow. However, it should be understood that the detailed description and specific examples such as embodiments of the present disclosure are given merely by way of example, since various changes and modifications within the spirit and scope of the present disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a battery module according to an embodiment of the present disclosure.
FIG. 2 is an exploded perspective view of a battery module illustrated in FIG. 1.
FIG. 3 illustrates a battery cell assembly according to an embodiment of the present disclosure.
FIG. 4 illustrates a cross section taken along A1-A2 of a battery module of FIG. 1.
FIG. 5 illustrates a cross section taken along A1-A2 of a battery module of FIG. 1 in a thermal runaway situation.
FIG. 6 illustrates a bus bar assembly according to an embodiment of the present disclosure.
FIG. 7 is an exploded perspective view of a bus bar assembly.
FIG. 8 illustrates a cross section taken along B1-B2 of a bus bar assembly of FIG. 6.
FIG. 9 illustrates an expansion sheet according to an embodiment of the present disclosure.
FIG. 10 illustrates a method of manufacturing an expansion sheet.
FIG. 11 illustrates an expansion sheet forming a thickness depending on a position, as a cross section taken along B1-B2 of a bus bar assembly of FIG. 6.
FIG. 12 illustrates an expansion sheet of FIG. 11.
FIG. 13 illustrates a method of manufacturing an expansion sheet of FIG. 12.
FIG. 14 illustrates an expansion sheet that is convex toward a connection frame, as a cross section taken along B1-B2 of a bus bar assembly of FIG. 6.
FIG. 15 illustrates that an expansion sheet is foamed and expanded, as a cross section taken along A1-A2 of a battery module of FIG. 1 in a thermal runaway situation.

### DETAILED DESCRIPTION

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

In the drawings, sizes of the components may be exaggerated or reduced for convenience of explanation. For example, the size and the thickness of each component illustrated in the drawings are arbitrarily illustrated for convenience of explanation, and thus the present disclosure is not limited thereto unless specified as such.

If any embodiment is implementable differently, a specific order of processes may be performed differently from the order described. For example, two consecutively described processes may be performed substantially at the same time, or performed in the order opposite to the described order.

In the following embodiments, when layers, areas, components, etc. are connected, the following embodiments include both the case where layers, areas, and components are directly connected, and the case where layers, areas, and components are indirectly connected to other layers, areas, and components intervening between them. For example, when layers, areas, components, etc. are electrically connected, the present disclosure includes both the case where layers, areas, and components are directly electrically connected, and the case where layers, areas, and components are indirectly electrically connected to other layers, areas, and components intervening between them.

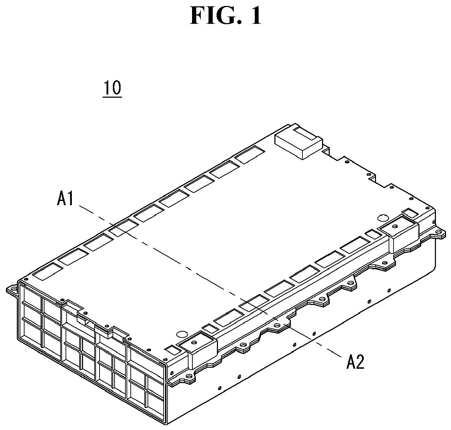

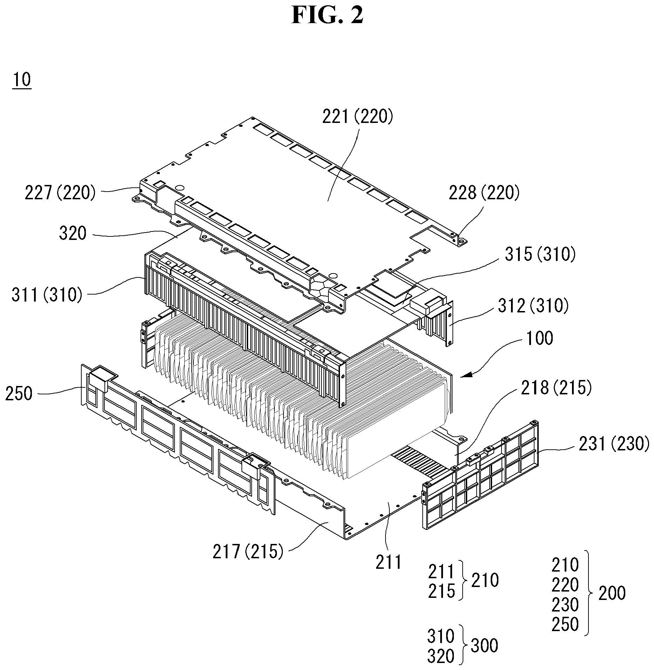

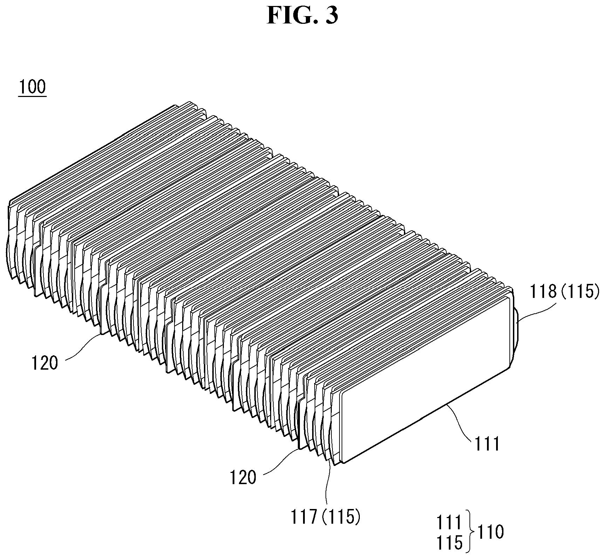

FIG. 1 illustrates a battery module 10 according to an embodiment of the present disclosure. FIG. 2 is an exploded perspective view of the battery module 10 illustrated in FIG. 1. FIG. 3 illustrates a battery cell assembly 100 according to an embodiment of the present disclosure.

Referring to FIGS. 1 to 3, the battery module 10 may include the battery cell assembly 100. The battery cell assembly 100 may include a plurality of battery cells 110. The plurality of battery cells 110 may be arranged or stacked in one direction. For example, a direction in which the plurality of battery cells 110 are arranged or stacked may be a longitudinal direction or a length direction of the battery module 10. The longitudinal direction of the battery module 10 may be a front-rear direction of the battery module 10.

Each of the plurality of battery cells 110 may include a battery cell body 111. The battery cell body 111 may extend from one end and lead to other end. The one end of the battery cell body 111 may be referred to as a "first end" of the battery cell body 111. The other end of the battery cell body 111 may be referred to as a "second end" of the battery cell body 111.

For example, the battery cell body 111 may form a shape extending in a width direction or a transverse direction of the battery module 10. In other words, a longitudinal direction or a length direction of the battery cell body 111 may be the width direction or the transverse direction of the battery module 10.

Each of the plurality of battery cells 110 may include an electrode tab 115. The electrode tab 115 may form a shape extending from the battery cell body 111. For example, the electrode tab 115 may form a shape protruding from the battery cell body 111. For example, the electrode tab 115 may include a first electrode tab 117 protruding from the first end of the battery cell body 111. For example, the electrode tab 115 may include a second electrode tab 118 protruding from the second end of the battery cell body 111.

The battery cell assembly 100 may include a heat blocking pad 120. The heat blocking pad 120 may be disposed between the plurality of battery cells 110. When thermal runaway occurs in one battery cell 110 of the plurality of battery cells 110, the heat blocking pad 120 can prevent heat or flame from the battery cell 110, in which the thermal runaway occurs, from moving to the surrounding battery cells. The heat blocking pad 120 may include a heat-resistant material.

The battery module 10 may include a case assembly 200. The case assembly 200 may include a first case 210. The first case 210 may accommodate the battery cell assembly 100.

The first case 210 may include a bottom case 211. The bottom case 211 may form the bottom of the case assembly 200. The bottom case 211 may be positioned under the battery cell assembly 100. In other words, the battery cell assembly 100 may be loaded on the bottom case 211.

The bottom case 211 may include four edges. The four edges of the bottom case 211 may form a perimeter of the bottom case 211. The two long edges of the bottom case 211 may be two edges extending along the longitudinal direction of the battery module 10 among the four edges of the bottom case 211.

A "first long edge" of the bottom case 211 may be a long edge adjacent to the first end of the battery cell body 111 among the two long edges of the bottom case 211. A "second long edge" of the bottom case 211 may be a long edge adjacent to the second end of the battery cell body 111 among the two long edges of the bottom case 211. The first long edge and the second long edge of the bottom case 211 may face each other or may be parallel to each other.

The first case 210 may include a side case 215. The side case 215 may be formed to extend upward from the bottom case 211. The side case 215 may be integrally formed with the bottom case 211.

A plurality of side cases 215 may be provided. For example, the side case 215 may include a first side case 217 extending upward from the first long edge of the bottom case 211. For example, the side case 215 may include a second side case 218 extending upward from the second long edge of the bottom case 211. The second side case 218 may face the first side case 217. A direction from the first side case 217 to the second side case 218 may be parallel to the transverse direction of the battery module 10.

The case assembly 200 may include a second case 220. The second case 220 may include a top case 221. The top case 221 may be formed of a material including metal.

The top case 221 may include four edges. The four edges of the top case 221 may form a perimeter of the top case 221. The two long edges of the top case 221 may be two edges extending along the longitudinal direction of the battery module 10 among the four edges of the top case 221.

A "first long edge" of the top case 221 may be a long edge adjacent to the first end of the battery cell body 111 among the two long edges of the top case 221. A "second long edge" of the top case 221 may be a long edge adjacent to the second end of the battery cell body 111 among the two long edges of the top case 221. The first long edge and the second long edge of the top case 221 may face each other or may be parallel to each other.

The second case 220 may include wing cases 227 and 228. The wing cases 227 and 228 may be integrally formed with the top case 221. The wing cases 227 and 228 may be formed to extend downward from the edge of the top case 221.

For example, the wing cases 227 and 228 may include a first wing case 227 extending downward from the first long edge of the top case 221. For example, the wing cases 227 and 228 may include a second wing case 228 extending downward from the second long edge of the top case 221.

The wing cases 227 and 228 may be coupled or fastened to the side case 215. For example, the first wing case 227 may be coupled or fastened to the first side case 217. For example, the second wing case 228 may be coupled or fastened to the second side case 218.

The case assembly 200 may include a front and rear case 230. The front and rear case 230 may include a front case 231. The front case 231 may face the battery cell assembly 100. The front case 231 may be positioned at a front of the battery cell assembly 100.

The front case 231 may be connected or coupled to a front end of the first side case 217. The front case 231 may be connected or coupled to a front end of the second side case 218. The front case 231 may be connected or coupled to a front end of the bottom case 211.

The case assembly 200 may include an insulating cover 250. The insulating cover 250 may be disposed between the battery cell assembly 100 and the side case 215. The insulating cover 250 may include an insulating material.

The battery module 10 may include a bus bar assembly 300. The bus bar assembly 300 may be electrically connected to the battery cell assembly 100. The bus bar assembly 300 may be disposed between the battery cell assembly 100 and the case assembly 200.

The bus bar assembly 300 may include a bus bar unit 310. The bus bar unit 310 may electrically connect the plurality of battery cells 110. A plurality of bus bar units 310 may be provided.

For example, the bus bar unit 310 may include a first bus bar unit 311 disposed between the first side case 217 and the battery cell assembly 100. The first bus bar unit 311 may electrically connect the first electrode tabs 117 of the plurality of battery cells 110.

For example, the bus bar unit 310 may include a second bus bar unit 312 disposed between the second side case 218 and the battery cell assembly 100. The second bus bar unit 312 may electrically connect the second electrode tabs 118 of the plurality of battery cells 110.

The bus bar assembly 300 may include a bus bar connection portion 315. The bus bar connection portion 315 may connect the first bus bar unit 311 and the second bus bar unit 312. The first bus bar unit 311 and the second bus bar unit 312 may transmit and receive at least one of electrical signals and power through the bus bar connection portion 315.

The bus bar assembly 300 may include a connection frame 320. The connection frame 320 may be coupled to the first bus bar unit 311 and the second bus bar unit 312. The connection frame 320 may support the first bus bar unit 311 and the second bus bar unit 312. The connection frame 320 may support the bus bar connection portion 315. The connection frame 320 may be positioned on the battery cell assembly 100. The connection frame 320 may be positioned under the top case 221. The connection frame 320 may form a shape of a plate or a board.

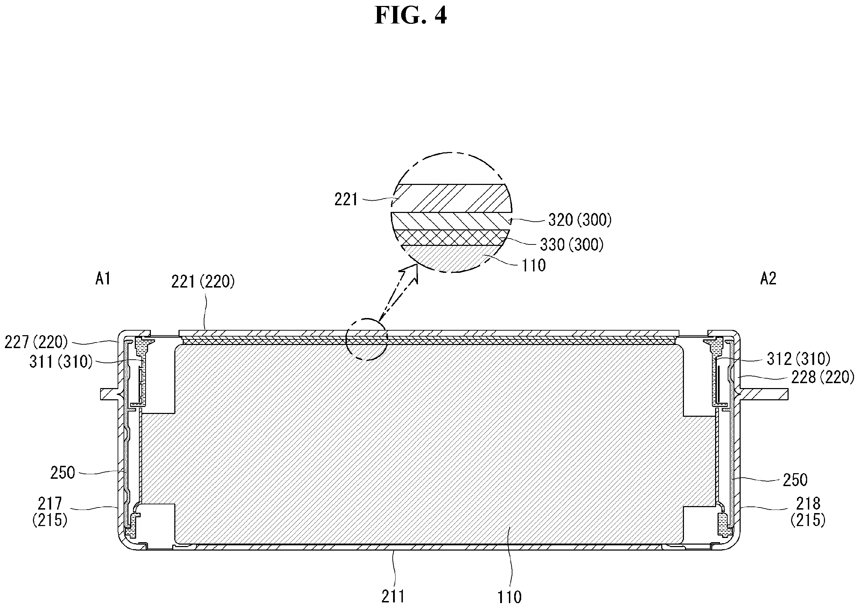

FIG. 4 illustrates a cross section taken along A1-A2 of the battery module 10 of FIG. 1.

Referring to FIG. 4, the bus bar assembly 300 may include a thermal barrier unit 330. The thermal barrier unit 330 may be coupled to a lower surface of the connection frame 320. The thermal barrier unit 330 may be disposed on the battery cell 110.

The thermal barrier unit 330 may include a refractory material. The thermal barrier unit 330 may suppress the movement of heat that is generated in the battery cell 110 and is directed toward the connection frame 320 in a situation where thermally runaway occurs in the battery cell 110.

In a situation where at least a portion of the connection frame 320 is melted by heat, the thermal barrier unit 330 may support the connection frame 320. In other words, even if a portion of the connection frame 320 is melted by heat, the thermal barrier unit 330 may prevent the melted connection frame 320 from moving to the battery cell 110.

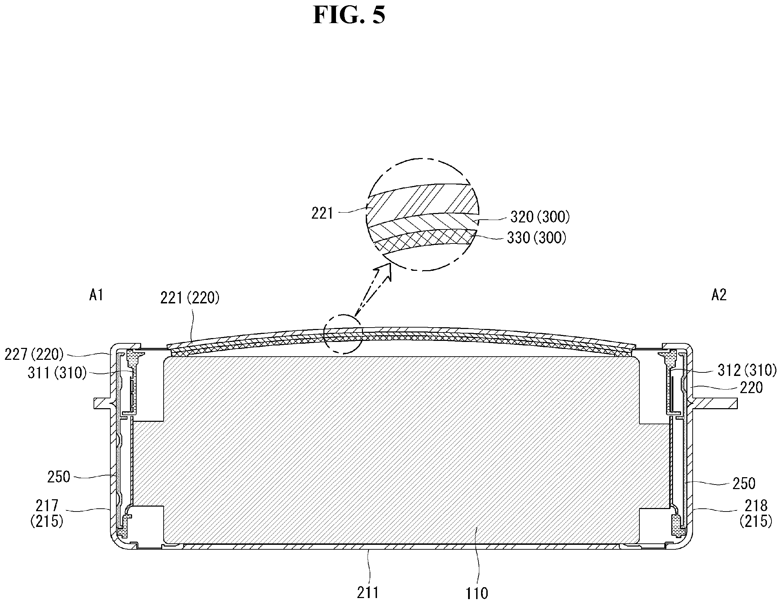

FIG. 5 illustrates a cross section taken along A1-A2 of a battery module 10 of FIG. 1 in a thermal runaway situation.

Referring to FIG. 5, when a fire occurs inside the battery module 10, the top case 221 may be deformed by heat. For example, when thermal runaway occurs in the battery cell 110, the top case 221 may be provided with heat. When the top case 221 is provided with heat, a temperature of the top case 221 may be higher than a specific temperature (or a predetermined temperature). When the temperature of the top case 221 is higher than the specific temperature, a central portion of the top case 221 may be convexly deformed upward. In other words, the top case 221 may be concave toward the battery cell 110. The predetermined temperature may be, for example, a temperature between 70 °C and 90 °C. For example, the predetermined temperature may be 70 °C.

As described above, when the top case 221 is convexly deformed upward, the connection frame 320 and the thermal barrier unit 330 positioned under the top case 221 may form a shape similar to a shape of the top case 221. That is, each of the connection frame 320 and the thermal barrier unit 330 may be upwardly convex.

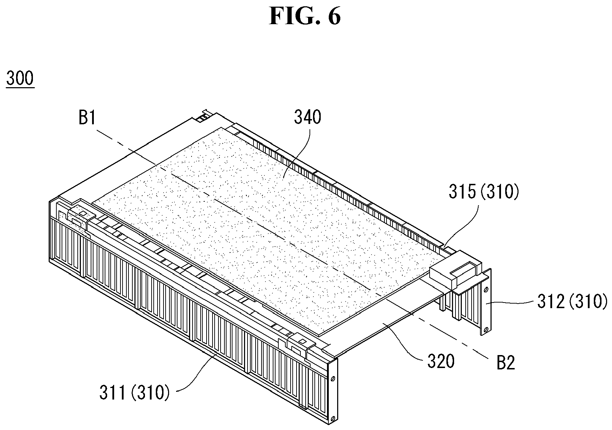

Thus, a space may be formed in an upper part of the battery cell 110. A high-temperature gas may be collected in the space formed in the upper part of the battery cell 110. Since the high-temperature gas collected in the space formed in the upper part of the battery cell 110 is difficult to be discharged to the outside, the thermal runaway situation of the battery cell 110 may worsen. To solve this problem, an expansion sheet 340 (see FIG. 6) may be disposed between the top case 221 and the connection frame 320.

FIG. 6 illustrates the bus bar assembly 300 according to an embodiment of the present disclosure.

Referring to FIG. 6, the bus bar assembly 300 may include the bus bar unit 310. The bus bar unit 310 may include a first bus bar unit 311 and a second bus bar unit 312. The bus bar unit 310 may indicate at least one of the first bus bar unit 311 and the second bus bar unit 312.

The bus bar assembly 300 may include the connection frame 320. The connection frame 320 may extend from an upper end of the first bus bar unit 311 and lead to an upper end of the second bus bar unit 312. The connection frame 320 may support the bus bar connection portion 315.

The bus bar assembly 300 may include the expansion sheet 340. The expansion sheet 340 may be disposed on an upper surface of the connection frame 320. The expansion sheet 340 coupled to or disposed on the connection frame 320 may face the top case 221 (see FIG. 4).

The expansion sheet 340 may be foamed and expanded at a temperature higher than a room temperature. For example, in the thermal runaway situation of the battery cell 110 (see FIG. 4), the expansion sheet 340 may be foamed and expanded.

For example, the expansion sheet 340 may be formed of a material including at least one of butyl, EVA, PVC, epoxy, vinyl chloride, polychloroprene, paraffin, airgel, EPDM, fireproof urethane foam, flame retardant rubber foam insulation, mineral wool, ceramic wool, glass wool, polyester wool, waste fiber wool, flame retardant silicone foam, flame retardant polyurethane foam, flame retardant PE foam, flame retardant EVA foam, and flame retardant organic compound foam.

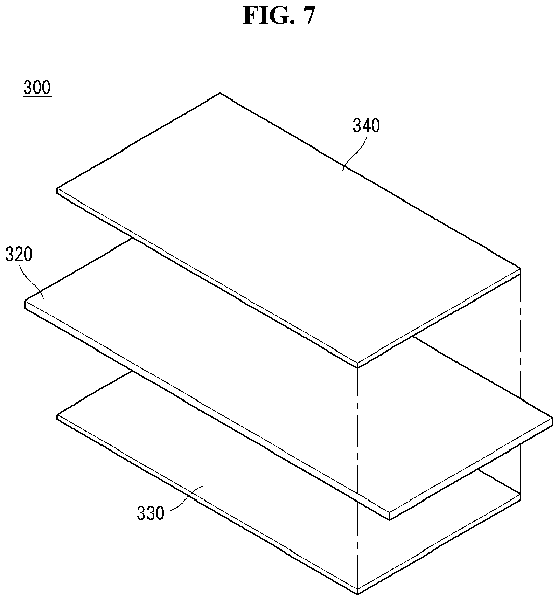

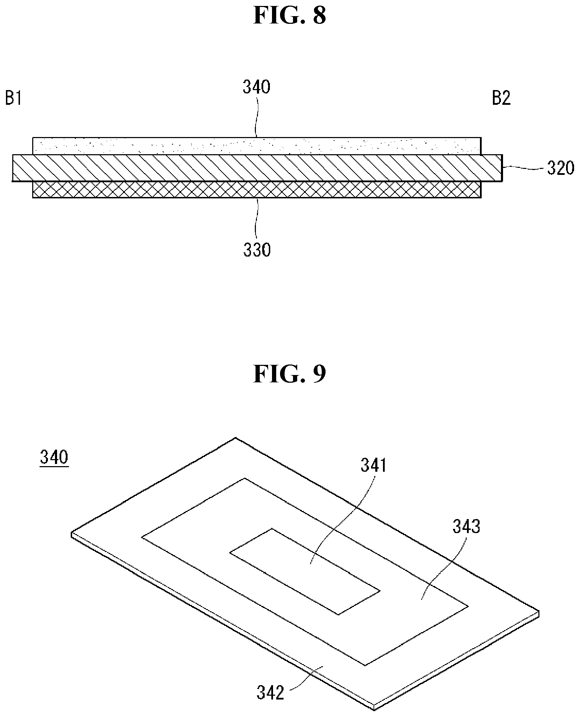

FIG. 7 is an exploded perspective view of the bus bar assembly 300. The illustration of the bus bar unit 310 (see FIG. 6) may be omitted in FIG. 7 for convenience of explanation. FIG. 8 illustrates a cross section taken along B1-B2 of the bus bar assembly 300 of FIG. 6.

Referring to FIGS. 7 and 8, the thermal barrier unit 330 may be positioned under the connection frame 320. The thermal barrier unit 330 may be attached, coupled, or connected to the lower surface of the connection frame 320. The thermal barrier unit 330 may face the battery cell 110 (see FIG. 4). The thermal barrier unit 330 may form a plate or sheet shape. The thermal barrier unit 330 may be flexible.

The expansion sheet 340 may be positioned on the connection frame 320. The expansion sheet 340 may be attached, coupled, or connected to the upper surface of the connection frame 320. The expansion sheet 340 may face the top case 221 (see FIG. 2). The expansion sheet 340 may form a plate or sheet shape.

FIG. 9 illustrates an expansion sheet according to an embodiment of the present disclosure. More specifically, FIG. 9 is a perspective view of the expansion sheet 340.

Referring to FIG. 9, the expansion sheet 340 may include a first expansion sheet portion 341. The first expansion sheet portion 341 may be formed at the center of the expansion sheet 340. The first expansion sheet portion 341 may not meet a perimeter of the expansion sheet 340. The first expansion sheet portion 341 may refer to a central area of the expansion sheet 340.

The expansion sheet 340 may include a second expansion sheet portion 342. The second expansion sheet portion 342 may be formed along the perimeter of the expansion sheet 340. The second expansion sheet portion 342 may refer to a perimeter area of the expansion sheet 340.

The expansion sheet 340 may include a third expansion sheet portion 343. The third expansion sheet portion 343 may be positioned between the first expansion sheet portion 341 and the second expansion sheet portion 342. The third expansion sheet portion 343 may surround the first expansion sheet portion 341. The second expansion sheet portion 342 may surround the third expansion sheet portion 343.

The expansion sheet 340 may have an expansion rate at a specific temperature. The specific temperature may refer to a temperature formed inside the battery module 10 (see FIG. 2) due to thermal runaway of the battery cell 110 (see FIG. 2). When a volume of the expansion sheet 340 at the room temperature is a first volume and the volume of the expansion sheet 340 at the specific temperature is a second volume, the expansion rate of the expansion sheet 340 at the specific temperature may be a value obtained by dividing the second volume by the first volume. For example, when the volume of the expansion sheet 340 at the room temperature is 10 cc and the volume of the expansion sheet 340 at the specific temperature is 30 cc, the expansion rate of the expansion sheet 340 at the specific temperature may be 3 obtained by dividing 30 by 10.

An expansion rate of the first expansion sheet portion 341 may be referred to as a "first expansion rate". An expansion rate of the second expansion sheet portion 342 may be referred to as a "second expansion rate". An expansion rate of the third expansion sheet portion 343 may be referred to as a "third expansion rate".

The expansion sheet 340 may have a different expansion rate depending on a point or spot. For example, the first expansion rate may be greater than the third expansion rate. For example, the third expansion rate may be greater than the second expansion rate. In other words, the expansion rate of the expansion sheet 340 may increase as it goes from the perimeter of the expansion sheet 340 toward the center of the expansion sheet 340. The expansion rate of the expansion sheet 340 may vary depending on a point or spot of the expansion sheet 340 by varying a composition ratio of the expansion sheet 340 depending on the point or spot of the expansion sheet 340.

As described above, by increasing the expansion rate of the expansion sheet 340 as it goes from the perimeter of the expansion sheet 340 toward the center of the expansion sheet 340, the expansion sheet 340 can efficiently fill a space formed in the top case 221 (see FIG. 5) suitably for the upward convex shape of the top case 221 (see FIG. 5) as illustrated in FIG. 5.

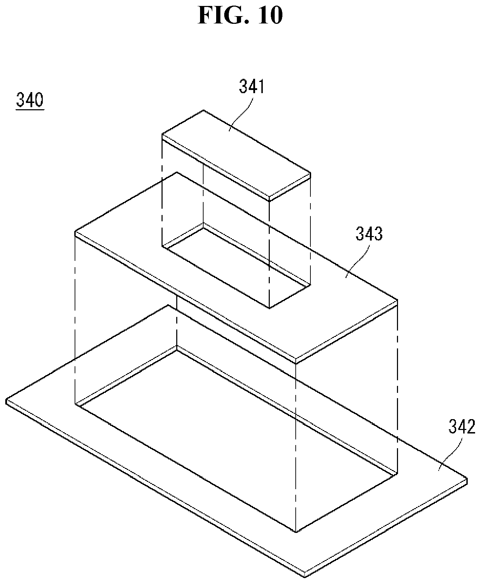

FIG. 10 illustrates a method of manufacturing an expansion sheet.

Referring to FIG. 10, an opening may be formed in the center of the second expansion sheet portion 342. The third expansion sheet portion 343 may be positioned in the opening formed in the second expansion sheet portion 342. In the opening formed in the second expansion sheet portion 342, the third expansion sheet portion 343 may be coupled, fixed, or connected to the second expansion sheet portion 342. The second expansion sheet portion 342 may be manufactured such that the second expansion rate is less than the third expansion rate.

An opening may be formed in the center of the third expansion sheet portion 343. The first expansion sheet portion 341 may be positioned in the opening formed in the third expansion sheet portion 343. In the opening formed in the third expansion sheet portion 343, the first expansion sheet portion 341 may be coupled, fixed, or connected to the third expansion sheet portion 343. The third expansion sheet portion 343 may be manufactured such that the third expansion rate is less than the first expansion rate.

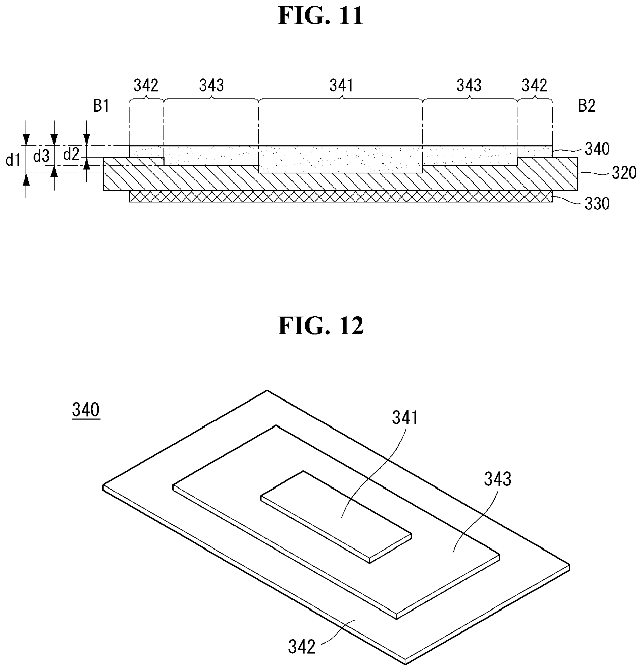

FIG. 11 illustrates an expansion sheet forming a thickness depending on a position, as a cross section taken along B1-B2 of a bus bar assembly of FIG. 6.

Referring to FIG. 11, the expansion sheet 340 may include the first expansion sheet portion 341, the second expansion sheet portion 342, and the third expansion sheet portion 343. A thickness of the expansion sheet 340 may vary depending on a point or spot of the expansion sheet 340. The thickness of the expansion sheet 340 may be measured based on a direction from the expansion sheet 340 toward the top case 221 (see FIG. 8).

A thickness of the first expansion sheet portion 341 may be a first thickness d1. A thickness of the second expansion sheet portion 342 may be a second thickness d2. A thickness of the third expansion sheet portion 343 may be a third thickness d3.

The thickness of the expansion sheet 340 may increase as it goes from the perimeter of the expansion sheet 340 toward the center of the expansion sheet 340. For example, the first thickness d1 may be greater than the third thickness d3. For example, the third thickness d3 may be greater than the second thickness d2.

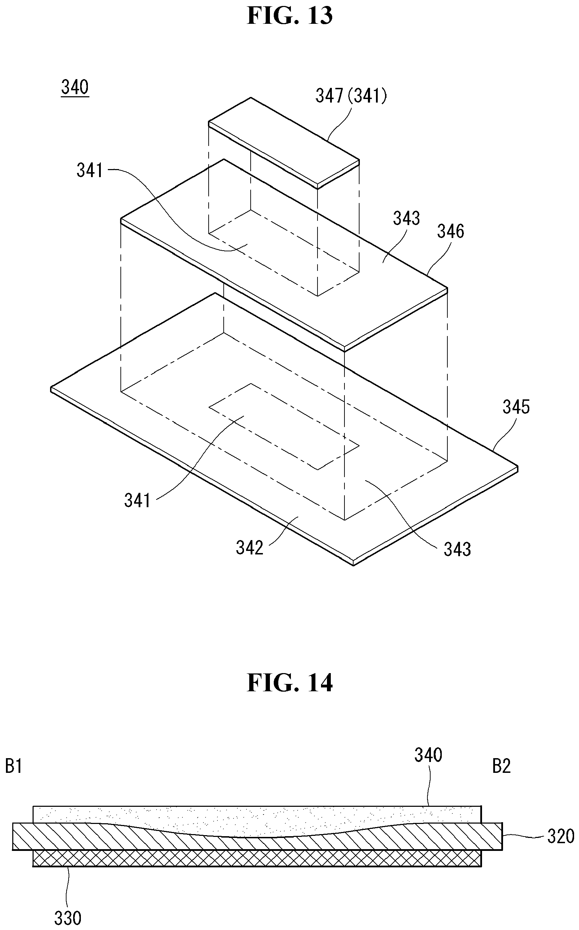

FIG. 12 illustrates the expansion sheet 340 of FIG. 11. A lower surface of the expansion sheet 340 may be observed in FIG. 12. The lower surface of the expansion sheet 340 may face the connection frame 320 (see FIG. 11). FIG. 13 illustrates a method of manufacturing the expansion sheet 340 of FIG. 12. The lower surface of the expansion sheet 340 may be observed in FIG. 13.

Referring to FIGS. 12 and 13, the expansion sheet 340 may include a plurality of layers. For example, the expansion sheet 340 may include a plurality of expansion sheet layers 345, 346, and 347. The plurality of expansion sheet layers 345, 346, and 347 may be stacked in an up-down direction.

In FIGS. 12 and 13, the lower surface of the expansion sheet 340 may be observed. The lower surface of the expansion sheet 340 may face the connection frame 320 or may be coupled or attached to the connection frame 320.

Referring to FIGS. 12 and 13, the expansion sheet 340 may include a first expansion sheet layer 345. A second expansion sheet portion 342 may be formed along a perimeter of the first expansion sheet layer 345. The first expansion sheet layer 345 may face the top case 221 (see FIG. 2).

The expansion sheet 340 may include a second expansion sheet layer 346. The second expansion sheet layer 346 may be attached, coupled, connected, or fixed to the first expansion sheet layer 345. The second expansion sheet layer 346 may be positioned under the first expansion sheet layer 345. A third expansion sheet portion 343 may be formed along a perimeter of the second expansion sheet layer 346.

The expansion sheet 340 may include a third expansion sheet layer 347. The third expansion sheet layer 347 may be positioned under the second expansion sheet layer 346. The third expansion sheet layer 347 may be attached, coupled, connected, or fixed to the second expansion sheet layer 346. A perimeter of the third expansion sheet layer 347 may refer to an area of the first expansion sheet portion 341.

The third expansion sheet portion 343 may be formed on the first expansion sheet layer 345 and the second expansion sheet layer 346. For example, the third expansion sheet portion 343 formed on the first expansion sheet layer 345 may be surrounded by the second expansion sheet portion 342. The third expansion sheet portion 343 formed on the second expansion sheet layer 346 may form a layer with the third expansion sheet portion 343 formed on the first expansion sheet layer 345.

The first expansion sheet portion 341 may be formed on the first expansion sheet layer 345, the second expansion sheet layer 346, and the third expansion sheet layer 347. For example, the first expansion sheet portion 341 formed on the first expansion sheet layer 345 may be surrounded by the third expansion sheet portion 343 formed on the first expansion sheet layer 345. For example, the first expansion sheet portion 341 formed on the second expansion sheet layer 346 may be surrounded by the third expansion sheet portion 343 formed on the second expansion sheet layer 346. The first expansion sheet portion 341 formed on the first expansion sheet layer 345, the first expansion sheet portion 341 formed on the second expansion sheet layer 346, and the third expansion sheet layer 347 may be stacked.

The third expansion sheet layer 347 may form the first expansion sheet portion 341 facing the connection frame 320 (see FIG. 11). An area of the second expansion sheet layer 346 surrounding an area coupled to the third expansion sheet layer 347 may form the third expansion sheet portion 343 facing the connection frame 320 (see FIG. 11). An area of the first expansion sheet layer 345 surrounding an area coupled to the second expansion sheet layer 346 may form the second expansion sheet portion 342 facing the connection frame 320 (see FIG. 11).

The first expansion sheet portion 341 and the third expansion sheet portion 343 may form a step difference. The third expansion sheet portion 343 and the second expansion sheet portion 342 may form a step difference. In other words, the first expansion sheet layer 345 and the second expansion sheet layer 346 may form a step difference, and the second expansion sheet layer 346 and the third expansion sheet layer 347 may form a step difference.

FIG. 14 illustrates an expansion sheet that is convex toward a connection frame, as a cross section taken along B 1-B2 of the busbar assembly of FIG. 6.

Referring to FIG. 14, the expansion sheet 340 may be convex toward the connection frame 320. In other words, the lower surface of the expansion sheet 340 may be convex toward the connection frame 320. The lower surface of the expansion sheet 340 may face the connection frame 320. An upper surface of the expansion sheet 340 may be flat.

The upper surface of the connection frame 320 may face the expansion sheet 340. The upper surface of the connection frame 320 may be concave toward the expansion sheet 340. The lower surface of the connection frame 320 may be flat.

An upper surface of the thermal barrier unit 330 may face the connection frame 320. The upper surface of the thermal barrier unit 330 may be flat. A lower surface of the thermal barrier unit 330 may face the battery cell 110 (see FIG. 2). The lower surface of the thermal barrier unit 330 may be flat.

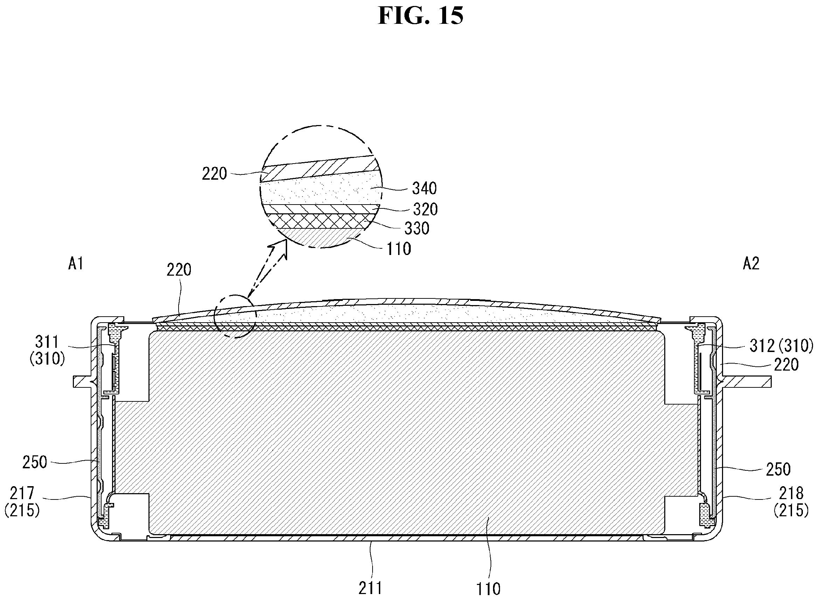

FIG. 15 illustrates that the expansion sheet 340 is foamed and expanded, as a cross section taken along A1-A2 of the battery module 10 of FIG. 1 in a thermal runaway situation.

Referring to FIG. 15, in a situation where thermal runaway occurs in the battery module 10, the top case 221 may be concave toward the battery cell 110. In the situation where thermal runaway occurs in the battery module 10, the expansion sheet 340 may be foamed, and the space formed in the top case 221 may be filled by the expanded expansion sheet 340.

When the space formed in the top case 221 is filled by the expansion sheet 340, for example, the thermal barrier unit 330 can continuously defend against flame, etc. generated from the battery cell 110.

Further, since the space formed in the top case 221 is filled by the expansion sheet 340, heat and flame can be effectively discharged to the outside through an intended path.

Referring to FIGS. 9 to 15, in the situation where thermal runaway occurs in the battery module 10, the top case 221 may be concave toward the battery cell 110. That is, a space may be formed between the top case 221 and the battery cell assembly 100 (see FIG. 2).

In the situation where thermal runaway occurs in the battery module 10, the expansion sheet 340 may be foamed and expanded by heat. When the expansion sheet 340 is foamed and expanded, the expanded expansion sheet 340 may fill a space formed in the top case 221.

A distance between the concave top case 221 and the connection frame 320 may vary depending on a point or spot of the expansion sheet 340. For example, a distance between the top case 221 and the connection frame 320 at the center of the expansion sheet 340 may be greater than a distance between the top case 221 and the connection frame 320 at an edge of the expansion sheet 340.

An extent to which the expansion sheet 340 expands may vary depending on a point or spot of the expansion sheet 340. A height (or length) at which the expansion sheet 340 expands may increase as it goes from the edge of the expansion sheet 340 toward the center of the expansion sheet 340. The length at which the expansion sheet 340 expands may refer to a difference between a height of the upper surface of the expansion sheet 340 before the expansion sheet 340 is foamed and expanded and a height of the upper surface of the expansion sheet 340 after the expansion sheet 340 is foamed and expanded, based on the direction from the expansion sheet 340 toward the top case 221.

Referring to FIGS. 11 to 14, in order to vary the length, at which the expansion sheet 340 expands, depending on a point or spot of the expansion sheet 340, the thickness of the expansion sheet 340 may vary depending on the point or spot of the expansion sheet 340. For example, the thickness of the expansion sheet 340 may increase as it goes from the edge of the expansion sheet 340 toward the center of the expansion sheet 340. For example, the upper surface of the expansion sheet 340 may be flat, and the lower surface of the expansion sheet 340 may be convex.

Referring to FIGS. 9 and 10, in order to vary the length, at which the expansion sheet 340 expands, depending on a point or spot of the expansion sheet 340, the expansion rate of the expansion sheet 340 may vary depending on the point or spot of the expansion sheet 340. For example, the expansion rate of the expansion sheet 340 may increase as it goes from the edge of the expansion sheet 340 toward the center of the expansion sheet 340. For example, both the upper and lower surfaces of the expansion sheet 340 may be flat.

Some embodiments or other embodiments of the present disclosure described above are not mutually exclusive or distinct from each other. Configurations or functions of some embodiments or other embodiments of the present disclosure described above can be used together or combined with each other.

It is apparent to those skilled in the art that the present disclosure can be embodied in other specific forms without departing from the spirit and essential features of the present disclosure. Accordingly, the above detailed description should not be construed as limiting in all aspects and should be considered as illustrative. The scope of the present disclosure should be determined by rational interpretation of the appended claims, and all modifications within an equivalent scope of the present disclosure are included in the scope of the present disclosure.

## Claims

1. A battery module (10) comprising:
a battery cell assembly (100) including a plurality of battery cells (110);
a case assembly (200) accommodating the battery cell assembly (100), the case assembly (200) including a top case (221) positioned on the battery cell assembly (100); and
a bus bar assembly (300) including:
a bus bar unit (310) configured to electrically connect the plurality of battery cells (110);
a connection frame (320) connected to the bus bar unit (310) and positioned under the top case (221); and
an expansion sheet (340) positioned between the connection frame (320) and the top case (221),
wherein the expansion sheet (340) is expanding by heat.

2. The battery module of claim 1, wherein the expansion sheet (340) is expanding at a temperature of the expansion sheet (340) being higher than or equal to a predetermined temperature, preferably wherein the expansion sheet (340) expands toward the top case (221).

3. The battery module of claim 1 or 2, wherein an upper surface of the expansion sheet (340) is flat, and
wherein a lower surface of the expansion sheet (340) is convex toward the connection frame (320).

4. The battery module of any one of claims 1 to 3, wherein when the heat is applied to the expansion sheet (340) and the top case (221),
the top case (221) is concave toward the battery cell assembly (100), and
the expansion sheet (340) is expanded and fills a space formed in the top case (221).

5. The battery module of anyone of the preceding claims, wherein the expansion sheet (340) includes:
a first expansion sheet portion (341) forming a central portion of the expansion sheet (340); and
a second expansion sheet portion (342) forming an edge of the expansion sheet (340),
wherein an expansion rate of the first expansion sheet portion (341) is greater than an expansion rate of the second expansion sheet portion (342).

6. The battery module of claim 5, wherein the second expansion sheet portion (342) surrounds the first expansion sheet portion (341).

7. The battery module of claim 5 or 6, wherein the expansion sheet (340) further includes a third expansion sheet portion (343) positioned between the first expansion sheet portion (341) and the second expansion sheet portion (342), and
wherein an expansion rate of the third expansion sheet portion is less than the expansion rate of the first expansion sheet portion (341) and is greater than the expansion rate of the second expansion sheet portion (342).

8. The battery module of claim 7, wherein a thickness of the third expansion sheet portion (343) is less than the thickness of the first expansion sheet portion (341) and is greater than the thickness of the second expansion sheet portion (342).

9. The battery module of anyone of the preceding claims, wherein the expansion sheet (340) includes:
a first expansion sheet layer (345) positioned between the top case (221) and the connection frame (320);
a second expansion sheet layer (346) positioned between the first expansion sheet layer (345) and the connection frame (320) and coupled to the first expansion sheet layer (345); and
a third expansion sheet layer (347) positioned between the second expansion sheet layer (346) and the connection frame (320) and coupled to the second expansion sheet layer (346).

10. The battery module of anyone of claims 5 to 9, wherein the expansion sheet (340) includes:
a first expansion sheet portion (341) forming an area occupied by the third expansion sheet layer (347), the first expansion sheet portion (341) facing the connection frame (320);
a second expansion sheet portion (342) surrounding an area of the first expansion sheet layer (345) coupled to the second expansion sheet layer (346); and
a third expansion sheet portion (343) surrounding an area of the second expansion sheet layer (346) coupled to the third expansion sheet layer (347).

11. The battery module of claim 9 or 10, wherein an upper surface of the first expansion sheet layer (345) is flat,
wherein the first expansion sheet layer (345) and the second expansion sheet layer (346) form a step difference, and
wherein the second expansion sheet layer (346) and the third expansion sheet layer (347) form a step difference.

12. The battery module of anyone of the preceding claims, wherein the bus bar assembly (300) further includes a thermal barrier unit (330) that faces a lower surface of the connection frame (320) and suppresses a heat generated in the battery cell assembly (100) from moving to the connection frame (320).

13. The battery module of anyone of the preceding claims, wherein a length, at which the expansion sheet (340) expands toward the top case (221), increases as it goes from an edge to a central portion of the expansion sheet (340).

14. The battery module of anyone of the preceding claims, wherein a length at which the expansion sheet (340) expands toward the top case (221) at a central portion of the expansion sheet is greater than a length at which the expansion sheet (340) expands toward the top case (221) at an edge of the expansion sheet.

15. The battery module of anyone of the preceding claims, wherein the expansion sheet (340) is expanding by heat at a temperature of at least 70°C, preferably in a range from 70 °C to 90 °C, more preferably the temperature is a predetermined temperature for the expansion sheet (340) to expand.
